# EUROPEAN PATENT SPECIFICATION

(11) **EP 3 722 724 B1**
(45) Date of publication and mention of the grant of the patent: **19.10.2022**
(21) Application number: 19398004.2
(22) Date of filing: 12.04.2019
(51) Int. Cl.: F28D 7/16, F28F 9/00, F02B 29/04

(54) **FLUID-TIGHT JOINT FOR HEAT EXCHANGER AND HEAT EXCHANGER COMPRISING SUCH A JOINT.**
FLÜSSIGKEITSDICHTE VERBINDUNG FÜR WÄRMETAUSCHER UND WÄRMETAUSCHER, DER EINE SOLCHE VERBINDUNG ENTHÄLT.
JOINT ETANCHE POUR ECHANGEUR DE CHALEUR ET ECHANGEUR DE CHALEUR COMPRENANT UN TEL JOINT.

(43) Date of publication of application: 14.10.2020
(73) Proprietor: João de Deus & Filhos, S.A., 2135-113 Samora Correia (PT)
(72) Inventor: Barata, Pedro, 2135-113 Samora Correia (PT); Barros, Marco, 2135-113 Samora Correia (PT); Horta, António, 2135-113 Samora Correia (PT); Oliveira, Mário, 2135-113 Samora Correia (PT)
(74) Representative: Vanzini, Christian

(56) References cited:
- EP-A2- 2 628 896
- WO-A1-95/18349
- FR-A1- 2 972 524
- JP-A- H0 325 297
- US-A1- 2007 169 926
- J-P Trotignon: "Précis de construction mécanique tome 2" In: "Précis de construction mécanique tome 2", 1 January 1996 (1996-01-01), Nathan, XP055633838, ISBN: 978-2-09-177193-9 pages 74-75, * page 75; figures 2-4 *

## Description

The present invention relates generally to heat exchangers, particularly for automotive applications.

In particular, there are known water cooled charge air coolers (WCACs) composed of a tube and fin stacking that forms a core of the WCAC. WCACs are commonly used in intake systems of internal combustion engines. In these WCACs, a water-based mixture is circulated through a jacket of the WCAC, which is connected to a water circuit. The water-based mixture passing through the jacket is used to cool down a gaseous fluid (air or gaseous mixture) conveyed by the tubes of the WCAC towards the intake system of the internal combustion engine.

The role of the jacket is therefore to keep the liquid contained in the WCAC. The main difficulty of such a design is to seal the liquid side of the WCAC, in particular where the jacket joins to the core plates.

EP 2 628 896 A2 discloses a heat exchanger comprising a plurality of parallel tubes, a pair of core plates, and a jacket connected to the core plates and defining with the core plates an inner volume for receiving a fluid. The tubes are placed within the inner volume. The jacket comprises a pair of opposite jacket plates.

One aim of the invention is to provide a solution that is capable of efficiently sealing the liquid side of WCACs. A further aim of the invention is to provide a solution for a fluid-tight joint for a heat exchanger where different components of the heat exchanger are brazed to each other to form a corner structure.

Accordingly, the invention proposes a fluid-tight joint for a heat exchanger according to claim 1.

When the first plate is a core plate of the heat exchanger, the second plate is a side plate of the heat exchanger, and the third plate is a jacket plate of the heat exchanger, the present invention provides an efficient solution to the problem of sealing liquid side of the WCAC where the jacket joins to the core plate. The jacket plates in their corners are deformed so that the geometry on the said corners matches the geometry of the adjacent components to which they braze, i.e., the side plate and core plate. This matching geometry allows for an easy brazing of the three components (jacket plate, side plate and core plate) without the need for addition of material.

The invention is mainly aimed at water cooled charge air coolers, but it can be used similarly on other liquid to gas heat exchangers or even on liquid to liquid heat exchangers where at least one of the circuits needs to be sealed off from the environment.

A further embodiment of the invention is heat exchanger comprising:
a plurality of parallel tubes for conveying a first fluid,
a pair of core plates, each having a plurality of openings into which respective ends of the tubes are inserted in a fluid-tight manner,
a jacket connected to the core plates in a fluid-tight manner and defining with the core plates an inner volume for receiving a second fluid, said tubes being placed within said inner volume,
wherein said jacket comprises a pair of opposite jacket plates and a pair of opposite side plates, each of said jacket plates comprising a pair of opposite, inwardly folded side flaps joined to the side plates, respectively, and a pair of opposite, outwardly folded end flaps joined to the core plates, respectively, and
wherein each of said side plates comprises a pair of end tongues inserted in a fluid-tight manner into respective slots formed through the core plates, respectively,
wherein the heat exchanger comprises at least one joint according to the invention, wherein at least one of the core plates is the first plate, at least one of the side plates is the second plate, at least one of the side flaps of the jacket plates is the third plate, and at least one of the end flaps is the folded flap.

In particular, the side flaps of each jacket plate are overlapping with the side plates, respectively, and the end flaps of each jacket plate are overlapping with the core plates, respectively.

Furthermore, the side flaps of each jacket plate are brazed to the side plates, respectively, the end flaps of each jacket plate are brazed to the core plates, respectively, and the tongues of each side plate are brazed to the core plates, respectively.

A method for producing a plate for a fluid-tight joint not covered by the claimed invention comprises the following steps
bending the plate to form a folded flap,
press stamping the plate to deform an area of the plate at a corner between the folded flap and the plate, hereinafter plate corner, to form a recess into the plate, and to deform an outer side of the plate corner to reduce the curvature radius of the plate corner.

A preferred, but non-limiting, embodiment of the invention will now be described with reference to the attached drawings, in which:

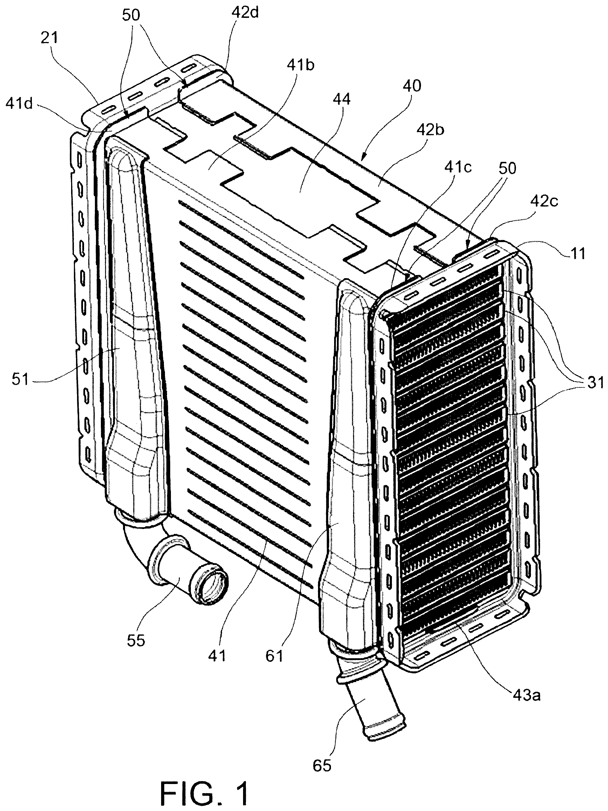

- Figure 1 is a perspective view showing a heat exchanger according to the invention;
- Figure 2 is an exploded view of the heat exchanger of Figure 1;
- Figures 3 and 4 are enlarged views of portions of the heat exchanger of Figure 1;
- Figure 5 is a sectioned view taken along line V-V of Figure 3;
- Figure 6 is an enlarged view of Figure 5;
- Figure 7 and 8 show different steps of a method for producing a jacket plate; and
- Figure 9 is an enlarged view of Figure 8.

A heat exchanger, such as for example a water charge air cooler, is shown in the drawings. The heat exchanger comprises an inlet core plate 11 and an outlet core plate 21, both of metal material, such as for example aluminium. These core plates 11 and 21 are intended to be connected in a known way to an inlet header tank (not shown) and to an outlet header tank (not shown), respectively.

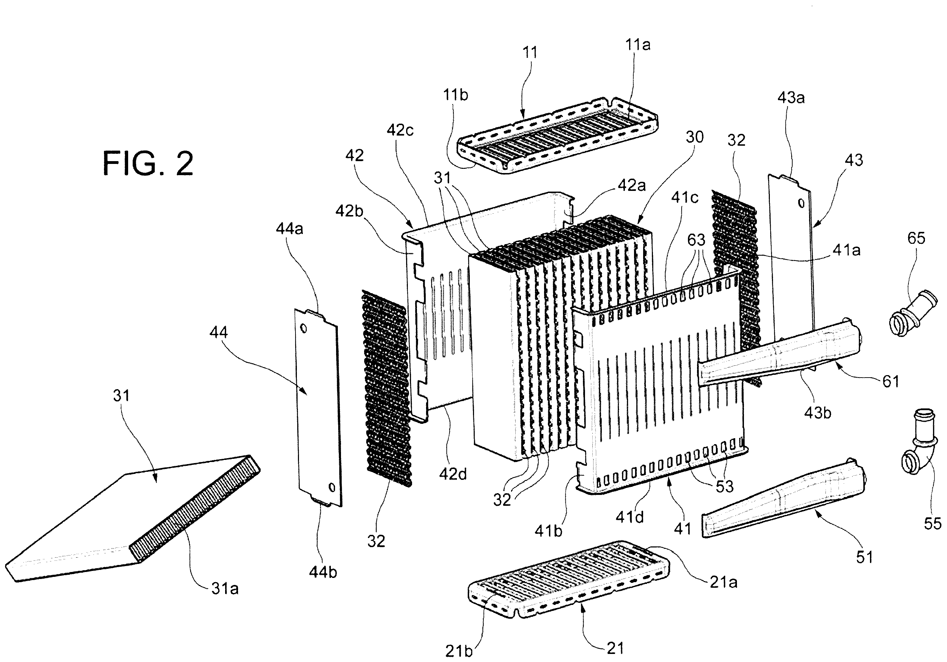

The heat exchanger 1 further comprises a core 30 comprising a plurality of parallel flat tubes 31 extending between the core plates 11 and 21, one of which tubes is also individually shown in Figure 2. The tubes 31 are of metal material, such as for example aluminium. Each tube 31 has opposite ends inserted into openings or slots formed in one or the other of the core plates 11, 21, respectively. Each tube 31 has an approximately rectangular cross-section, and comprises a pair of opposite long sidewalls and a pair of opposite short sidewalls which interconnect the long sidewalls and are shorter than the long sidewalls. Within each tube 31, there is arranged a respective finned plate 31a.

A first fluid, particularly a gaseous fluid such as, for example, air or a gaseous mixture, is designed to flow from the inlet header tank of the heat exchanger, through the fluid connections between the inlet core plate 11 and tubes 31, to the outlet header tank of the heat exchanger, through the fluid connections between the tubes 31 and outlet core plate 21. Through the inlet and outlet header tanks, the heat exchanger can be connected to a fluid circuit for the first fluid (not shown), comprising for example an intake system of an internal combustion engine.

A second fluid, particularly a liquid coolant such as, for example, water or a water-based mixture, is designed to flow around the core 30 and through gaps between the tubes 31, and exchange heat with the first fluid flowing into the tubes 31. Finned plates 32 are arranged into the gaps between the tubes 31, as well as adjacent to tubes 31 at opposite ends of the core 30.

The heat exchanger further comprises a jacket 40 of metal material, such as for example aluminium. The jacket 40 is connected to the core plates 11 and 21 in a fluid-tight manner and defines with the core plates 11 and 21 an inner volume for receiving/conveying the second fluid. The tubes 31 are placed within this inner volume formed by the jacket 40 and the core plates 11 and 21.

In the embodiment shown in the drawings, the jacket 40 has a rectangular cross-section and comprises a pair of opposite jacket plates 41 and 42 and a pair of opposite side plates 43 and 44 to which the jacket plates 41 and 42 are connected.

The heat exchanger further comprises an inlet fluid channel 51 and an outlet fluid channel 61 for conveying the second fluid to and from the inner volume formed by the jacket 40 along with the core plates 11, 21. Both fluid channels 51, 61 are of metal material, such as for example aluminium. Each fluid channel 51, 61 is joined to a wall of the jacket 40. In the example shown in the drawings, both fluid channels 51, 61 are joined to one of the jacket plates referenced with 41. In the example shown in the drawings, each fluid channel 51, 61 is formed as an elongate, concave shell, whose rim is joined to the jacket plate.

Each fluid channel 51, 61 is in fluid communication with the inner volume of the jacket 40 through a respective opening 53, 63 formed through the wall 41 of the jacket 40.

Figure 2 also shows inlet and outlet fluid connectors, 55 and 65, which are fixed to the inlet fluid channel 51 and the outlet fluid channel 61, respectively, to connect the heat exchanger to a fluid circuit for the second fluid (not shown), such as for example a liquid coolant circuit.

According to an embodiment, the tubes 31, core plates 11 and 21, and jacket 40 are joined to each other, fluid channels 51 and 61 are joined to the jacket 40, and connectors 55 and 65 are joined to the fluid channels 51 and 61 in a conventional manner, particularly by brazing. Basically, tubes 31 and finned plates 32 are stacked with side plates 43, 44 at the top and bottom and core plates 11, 21 on the sides in order to obtain a sub-assembly. Then, the jacket plates 41, 42 are placed over the sub-assembly. The sub-assembly and the jacket plates are held together with jigs and joined to each other by brazing. When the brazing process is completed, the jigs are removed.

Each jacket plate 41, 42 comprises a pair of opposite, inwardly folded side flaps 41a, 41b; 42a, 42b joined to the side plates 43 and 44, respectively, and a pair of opposite, outwardly folded end flaps 41c, 41d; 42c, 42d joined to the core plates 11 and 21, respectively. The side flaps 41a, 41b; 42a, 42b of each jacket plate 41, 42 are overlapping with the side plates 43 and 44, respectively, and the end flaps 41c, 41d; 42c, 42d of each jacket plate 41, 42 are overlapping with the core plates 11 and 21, respectively. Each end flap 41c, 41d; 42c, 42d extends over the main body as well as over the side flaps 41a, 41b; 42a, 42b of the respective jacket plate 41, 42. Therefore, each flap 41c, 41d; 42c, 42d is substantially C-shaped when viewed in plan view.

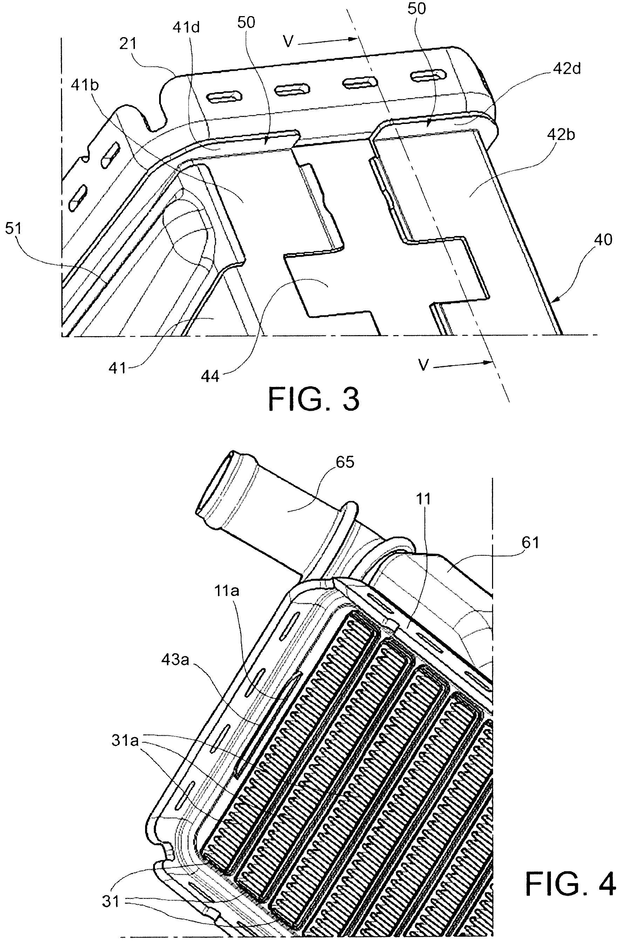

Each side plate 43, 44 comprises a pair of end tongues 43a, 43b; 44a, 44b inserted in a fluid-tight manner into respective slots 11a, lib; 21a, 21b formed through the core plates 11 and 21, respectively. One of the tongue-slot connections is shown in Figure 4.

With reference to Fig. 3-6, there is shown a fluid-tight, brazed joint 50 between the core plate (11 or 21), the side plate (43 or 44) and the side flap (41a, 41b, 42a or 42b) of the jacket plate (41 or 42). As the skilled person will appreciate, this joint may be applied to any liquid to gas heat exchangers or even to liquid to liquid heat exchangers where at least one of the circuits needs to be sealed off from the environment. Therefore, in the following description the core plate will be designated as first plate, the side plate will be designated as second plate, and the side flap of the jacket plate will be designated as third plate.

As explained above, a slot (11a, 11b, 21a or 21b) is formed through the first plate (11 or 21). The second plate (43 or 44) has an end (43a, 43b, 44a or 44b) inserted in a fluid-tight manner into the slot (11a, 11b, 21a or 21b) and brazed to the first plate (11 or 21).

The third plate (41a, 41b, 42a or 42b) comprises a folded flap (41c, 41d, 42c or 42d). The third plate (41a, 41b, 42a or 42b) is overlapping with, and is brazed to the second plate (43 or 44), and the flap (41c, 41d, 42c or 42d) is overlapping with, and is brazed to the first plate (11 or 21).

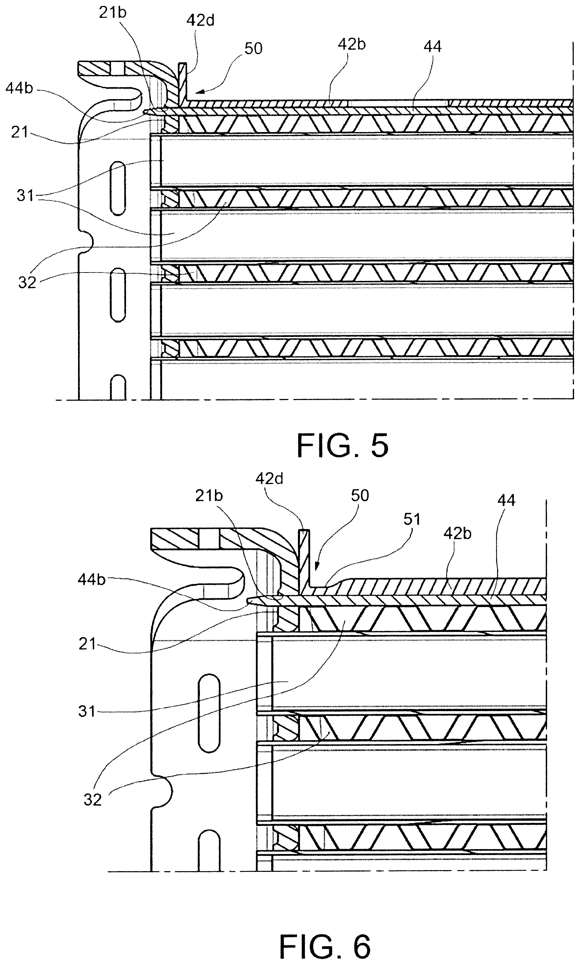

As shown in Figure 6, an area of the third plate (41a, 41b, 42a or 42b) at a corner between the folded flap (41c, 41d, 42c or 42d) and the third plate (41a, 41b, 42a or 42b), hereinafter third plate corner, is deformed to form a recess 51 into the thickness of the third plate (41a, 41b, 42a or 42b), and an outer side of the third plate corner is deformed to match a corner between the second plate (43 or 44) and the first plate (11 or 21).

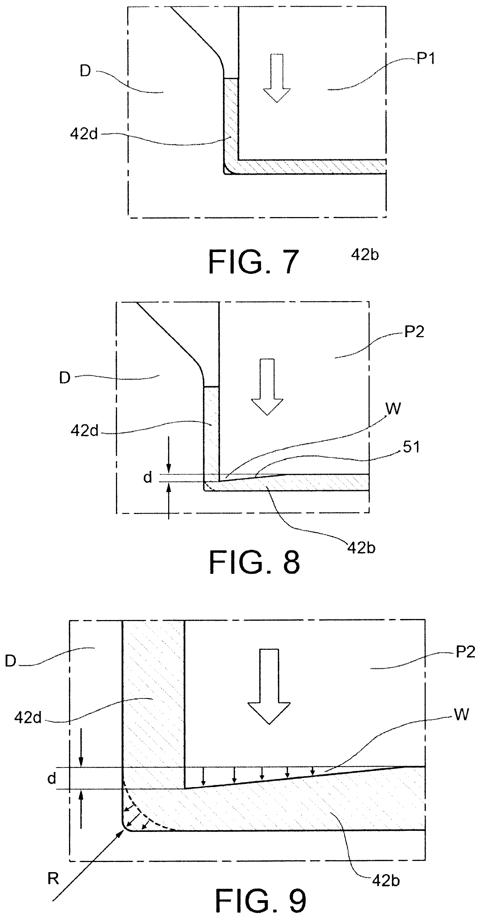

Figures 7-9 show a method for obtaining such a deformation into the third plate (41a, 41b, 42a or 42b). As a first step (Fig. 7), the third plate (41a, 41b, 42a or 42b) is bent to produce a 90 degrees bend, i.e. the folded flap (41c, 41d, 42c or 42d). This bending step may be performed with a press stamping process through a die D and punch P1. Then, the third plate (41a, 41b, 42a or 42b) is subjected to a second press stamping step, using a second punch P2 having a wedge-shaped projection W. The wedge-shaped projection W applies a local deformation to the third plate (41a, 41b, 42a or 42b), located at the third plate corner, in order to produce the recess 51 on the inner side of the corner, and reduce the curvature radius of the outer side of the third plate corner (see Figure 9).

As shown in Figure 9, the recess 51 is decreasing in depth d from the third plate corner towards the remaining part of the third plate (41a, 41b, 42a or 42b). For instance, the curvature radius R of the outer side of the third plate corner may have a nominal value of 0,2 mm.

In this way, the deformation of the third plate allows the geometry of the third plate corner to match the second plate and first plate shape, to match the side plate and core plate shape. This makes the gap between the three components as small as possible thus improving the brazeability of the joint.

## Claims

1. A fluid-tight joint (50) for a heat exchanger comprising
a first plate (11, 21) through which a slot (11a, 11b, 21a, 21b) is formed,
a second plate (43, 44) having an end (43a, 43b, 44a, 44b) inserted in a fluid-tight manner into said slot and brazed to the first plate (11, 21), and
a third plate (41a, 41b, 42a, 42b) comprising a folded flap (41c, 41d, 42c, 42d), wherein the third plate (41a, 41b, 42a, 42b) is overlapping with, and is brazed to the second plate (43, 44), and the flap (41c, 41d, 42c, 42d) is overlapping with, and is brazed to the first plate, (11, 21)
wherein
an area of the third plate (41a, 41b, 42a, 42b) at a corner between the folded flap (41c, 41d, 42c, 42d) and the third plate (41a, 41b, 42a, 42b), hereinafter third plate corner, is deformed to form a recess (51) into the thickness of the third plate (41a, 41b, 42a, 42b), wherein an outer side of the third plate corner is deformed to match a corner between the second plate (43, 44) and the first plate (11, 21).

2. A joint according to claim 1, wherein said recess is decreasing in depth (d) from the third plate corner towards the third plate (41a, 41b, 42a, 42b).

3. A heat exchanger comprising a joint according to any of claims 1 to 2, wherein the first plate (11, 21) is a core plate of the heat exchanger, the second plate (43, 44) is a side plate of the heat exchanger, and the third plate (41a, 41b, 42a, 42b) is a jacket plate of the heat exchanger.

4. A heat exchanger comprising:
a plurality of parallel tubes (31) for conveying a first fluid,
a pair of core plates (11, 21), each having a plurality of openings into which respective ends of the tubes are inserted in a fluid-tight manner,
a jacket (40) connected to the core plates (11, 21) in a fluid-tight manner and defining with the core plates (11, 21) an inner volume for receiving a second fluid, said tubes (31) being placed within said inner volume,
wherein said jacket comprises a pair of opposite jacket plates (41, 42) and a pair of opposite side plates (43, 44), each of said jacket plates comprising a pair of opposite, inwardly folded side flaps (41a, 41b, 42a, 42b) joined to the side plates (43, 44), respectively, and a pair of opposite, outwardly folded end flaps (41c, 41d, 42c, 42d) joined to the core plates (11, 21), respectively, and
wherein each of said side plates comprises a pair of end tongues (43a, 43b, 44a, 44b) inserted in a fluid-tight manner into respective slots (11a, 11b, 21a, 21b) formed through the core plates (11, 21), respectively,
wherein the heat exchanger comprises at least one joint according to any of claims 1 to 2, wherein at least one of the core plates is the first plate, at least one of the side plates is the second plate, at least one of the side flaps (41a, 41b, 42a, 42b) of the jacket plates (41, 42) is the third plate, and at least one of the end flaps (41c, 41d, 42c, 42d) is the folded flap,
wherein the side flaps (41a, 41b, 42a, 42b) of each jacket plate (41, 42) are overlapping with the side plates (43, 44), respectively, and wherein the end flaps (41c, 41d, 42c, 42d) of each jacket plate (41, 42) are overlapping with the core plates (11, 21), respectively, and
wherein the side flaps (41a, 41b, 42a, 42b) of each jacket plate (41, 42) are brazed to the side plates (43, 44), respectively, wherein the end flaps (41c, 41d, 42c, 42d) of each jacket plate (41, 42) are brazed to the core plates (11, 21), respectively, and wherein the end tongues (43a, 43b, 44a, 44b) of each side plate (43, 44) are brazed to the core plates (11, 21), respectively.

5. A heat exchanger according to claims 4, wherein said tubes (31) are configured to convey a gaseous fluid, and wherein said jacket (40) is configured to receive a liquid coolant.

## Patentansprüche

1. Fluiddichtes Verbindungsstück (50) für einen Wärmetauscher, aufweisend
eine erste Platte (11, 21), durch welche ein Langloch (11a, 11b, 21a, 21b) ausgebildet ist,
eine zweite Platte (43, 44) mit einem Ende (43a, 43b, 44a, 44b), das in fluiddichter Weise in das Langloch eingeführt und an die erste Platte (11, 21) angelötet ist, und
eine dritte Platte (41a, 41b, 42a, 42b), aufweisend eine Faltklappe (41c, 41d, 42c, 42d), wobei die dritte Platte (41a, 41b, 42a, 42b) die zweite Platte (43, 44) überlappt und an diese angelötet ist und die Klappe (41c, 41d, 42c, 42d) die erste Platte (11, 21) überlappt und an diese angelötet ist,
wobei
ein Bereich der dritten Platte (41a, 41b, 42a, 42b) in einer Ecke zwischen der Faltklappe (41c, 41d, 42c, 42d) und der dritten Platte (41a, 41b, 42a, 42b), nachfolgend Dritte-Platten-Ecke, verformt wird, um eine Aussparung (51) in dem dicksten Bereich der dritten Platte (41a, 41b, 42a, 42b) zu bilden, wobei eine Außenseite der Dritte-Platten-Ecke verformt wird, um zu einer Ecke zwischen der zweiten Platte (43, 44) und der ersten Platte (11, 21) zu passen.

2. Verbindungsstück nach Anspruch 1, wobei die Aussparung von der Dritte-Platten-Ecke zu der dritten Platte (41a, 41b, 42a, 42b) hin in ihrer Tiefe (d) abnimmt.

3. Wärmetauscher, aufweisend ein Verbindungsstück nach einem der Ansprüche 1 bis 2, wobei die erste Platte (11, 21) eine Trägerplatte des Wärmetauschers ist, die zweite Platte (43, 44) eine Seitenplatte des Wärmetauschers ist und die dritte Platte (41a, 41b, 42a, 42b) eine Mantelplatte des Wärmetauschers ist.

4. Wärmetauscher, aufweisend:
eine Vielzahl paralleler Rohre (31) zum Befördern eines ersten Fluids,
ein Paar Trägerplatten (11, 21), welche jeweils eine Vielzahl von Öffnungen aufweisen, in welche jeweilige Enden der Rohre in fluiddichter Weise eingeführt werden,
einen Mantel (40), der in fluiddichter Weise mit den Trägerplatten (11, 21) verbunden ist und der mit den Trägerplatten (11, 21) ein Innenvolumen zur Aufnahme eines zweiten Fluids definiert, wobei die Rohre (31) innerhalb des Innenvolumens angeordnet sind,
wobei der Mantel ein Paar gegenüberliegender Mantelplatten (41, 42) und ein Paar gegenüberliegender Seitenplatten (43, 44) aufweist, wobei jede der Mantelplatten ein Paar gegenüberliegender nach innen gefalteter, jeweils mit den Seitenplatten (43, 44) verbundener Seitenklappen (41a, 41b, 42a, 42b) und ein Paar gegenüberliegender, nach außen gefalteter, jeweils mit den Trägerplatten (11, 21) verbundener Endklappen (41c, 41d, 42c, 42d) aufweist, und
wobei jede der Seitenplatten ein Paar Endlaschen (43a, 43b, 44a, 44b) aufweist, die in fluiddichter Weise in jeweilige Langlöcher (11a, 11b, 21a, 21b) eingefügt werden, welche jeweils durch die Kernplatten (11, 21) ausgeformt sind,
wobei der Wärmetauscher mindestens ein Verbindungsstück nach einem der Ansprüche 1 bis 2 aufweist, wobei mindestens eine der Trägerplatten die erste Platte ist, mindestens eine der Seitenplatten die zweite Platte ist und mindestens eine der Seitenklappen (41a, 41b, 42a, 42b) der Mantelplatten (41, 42) die dritte Platte ist und mindestens eine der Endklappen (41c, 41d, 42c, 42d) die Faltklappe ist,
wobei die Seitenklappen (41a, 41b, 42a, 42b) jeder Mantelplatte (41, 42) jeweils mit den Seitenplatten (43, 44) überlappen und wobei die Endklappen (41c, 41d, 42c, 42d) jeder Mantelplatte (41, 42) jeweils mit den Trägerplatten (11, 21) überlappen, und
wobei die Seitenklappen (41a, 41b, 42a, 42b) jeder Mantelplatte (41, 42) jeweils an die Seitenplatten (43, 44) angelötet sind, wobei die Endklappen (41c, 41d, 42c, 42d) jeder Mantelplatte (41, 42) jeweils an die Trägerplatten (11, 21) angelötet sind und wobei die Endlaschen (43a, 43b, 44a, 44b) jeder Seitenplatte (43, 44) jeweils an die Trägerplatten (11, 21) angelötet sind.

5. Wärmetauscher nach Anspruch 4, wobei die Rohre (31) zum Transport eines gasförmigen Fluids ausgelegt sind und wobei der Mantel (40) zur Aufnahme eines flüssigen Kühlmittels ausgelegt ist.

## Revendications

1. Joint étanche (50) pour un échangeur de chaleur comprenant
une première plaque (11, 21) à travers laquelle une fente (11a, 11b, 21a, 21b) est formée,
une deuxième plaque (43, 44) ayant une extrémité (43a, 43b, 44a, 44b) insérée de manière étanche dans ladite fente et brasée sur la première plaque (11, 21), et
une troisième plaque (41a, 41b, 42a, 42b) comprenant un rabat replié (41c, 41d, 42c, 42d), dans lequel la troisième plaque (41a, 41b, 42a, 42b) chevauche, et est brasée sur la deuxième plaque (43, 44), et le rabat (41c, 41d, 42c, 42d) chevauche, et est brasé sur la première plaque (11, 21)
dans lequel une zone de la troisième plaque (41a, 41b, 42a, 42b) au niveau d'un angle entre le rabat replié (41c, 41d, 42c, 42d) et la troisième plaque (41a, 41b, 42a, 42b), ci-après angle de troisième plaque, est déformée pour former un évidement (51) dans l'épaisseur de la troisième plaque (41a, 41b, 42a, 42b), dans lequel un côté extérieur de l'angle de troisième plaque est déformé pour correspondre à un angle entre la deuxième plaque (43, 44) et la première plaque (11, 21).

2. Joint selon la revendication 1, dans lequel ledit évidement diminue en profondeur (d) à partir de l'angle de troisième plaque vers la troisième plaque (41a, 41b, 42a, 42b).

3. Échangeur de chaleur comprenant un joint selon l'une quelconque des revendications 1 à 2, dans lequel la première plaque (11, 21) est une plaque centrale de l'échangeur de chaleur, la deuxième plaque (43, 44) est une plaque latérale de l'échangeur de chaleur, et la troisième plaque (41a, 41b, 42a, 42b) est une plaque d'enveloppe de l'échangeur de chaleur.

4. Échangeur de chaleur comprenant :
une pluralité de tubes (31) parallèles permettant de transporter un premier fluide,
une paire de plaques centrales (11, 21), chacune ayant une pluralité d'ouvertures dans lesquelles des extrémités respectives des tubes sont insérées de manière étanche,
une enveloppe (40) reliée aux plaques centrales (11, 21) de manière étanche et définissant avec les plaques centrales (11, 21) un volume intérieur permettant de recevoir un second fluide, lesdits tubes (31) étant placés dans ledit volume intérieur,
dans lequel ladite enveloppe comprend une paire de plaques d'enveloppe (41, 42) opposées et une paire de plaques latérales (43, 44) opposées, chacune desdites plaques d'enveloppe comprenant une paire de rabats latéraux (41a, 41b, 42a, 42b) opposés, repliés vers l'intérieur assemblés avec les plaques latérales (43, 44), respectivement, et une paire de rabats d'extrémité (41c, 41d, 42c, 42d) opposés, repliés vers l'extérieur assemblés avec les plaques centrales (11, 21), respectivement, et
dans lequel chacune desdites plaques latérales comprend une paire de languettes d'extrémité (43a, 43b, 44a, 44b) insérées de manière étanche dans des fentes (11a, 11b, 21a, 21b) respectives formées à travers les plaques centrales (11, 21), respectivement,
dans lequel l'échangeur de chaleur comprend au moins un joint selon l'une quelconque des revendications 1 à 2, dans lequel au moins une des plaques centrales est la première plaque, au moins une des plaques latérales est la deuxième plaque, au moins un des rabats latéraux (41a, 41b, 42a, 42b) des plaques d'enveloppe (41, 42) est la troisième plaque, et au moins un des rabats d'extrémité (41c, 41d, 42c, 42d) est le rabat replié,
dans lequel les rabats latéraux (41a, 41b, 42a, 42b) de chaque plaque d'enveloppe (41, 42) chevauchent les plaques latérales (43, 44), respectivement, et dans lequel les rabats d'extrémité (41c, 41d, 42c, 42d) de chaque plaque d'enveloppe (41, 42) chevauchent les plaques centrales (11, 21), respectivement, et
dans lequel les rabats latéraux (41a, 41b, 42a, 42b) de chaque plaque d'enveloppe (41, 42) sont brasés sur les plaques latérales (43, 44), respectivement, dans lequel les rabats d'extrémité (41c, 41d, 42c, 42d) de chaque plaque d'enveloppe (41, 42) sont brasés sur les plaques centrales (11, 21), respectivement, et dans lequel les languettes d'extrémité (43a, 43b, 44a, 44b) de chaque plaque latérale (43, 44) sont brasées sur les plaques centrales (11, 21), respectivement.

5. Échangeur de chaleur selon les revendications 4, dans lequel lesdits tubes (31) sont configurés pour transporter un fluide gazeux, et dans lequel ladite enveloppe (40) est configurée pour recevoir un fluide caloporteur liquide.
